# EUROPÄISCHE PATENTSCHRIFT

(11) **EP 3 371 017 B1**
(45) Veröffentlichungstag und Bekanntmachung des Hinweises auf die Patenterteilung: **14.10.2020**
(21) Anmeldenummer: 16788719.9
(22) Anmeldetag: 02.11.2016
(51) Int. Cl.: B60T 11/32, B60T 13/22, B60T 13/26, B60T 13/38, B60T 15/04

(54) **PNEUMATISCHE BREMSEINRICHTUNG FÜR EIN NUTZFAHRZEUG**
PNEUMATIC BRAKING DEVICE FOR A UTILITY VEHICLE
DISPOSITIF DE FREINAGE PNEUMATIQUE POUR VÉHICULE UTILITAIRE

(30) Priorität: 06.11.2015 DE 102015119136
(43) Veröffentlichungstag der Anmeldung: 12.09.2018
(73) Patentinhaber: KNORR-BREMSE Systeme für Nutzfahrzeuge GmbH, 80809 München (DE)
(72) Erfinder: GRIESSER, Fabian, 80803 München (DE); KUHLEN, Christian, 85609 Aschheim (DE); SCHNITTGER, Karsten, 80935 München (DE)
(86) Internationale Anmeldenummer: PCT/EP2016/076410
(87) Internationale Veröffentlichungsnummer: WO 2017/076893

(56) Entgegenhaltungen:
- EP-A2- 0 976 636
- DE-A1-102005 058 799
- DE-A1-102010 011 978

## Beschreibung

Die vorliegende Erfindung betrifft eine pneumatische Bremseinrichtung für ein Nutzfahrzeug mit wenigstens einem pneumatisch ansteuerbaren Federspeicherbremszylinder und mit einer elektronischen Parkbremseinrichtung.

Pneumatische Bremseinrichtungen für Nutzfahrzeuge (z.B. Lastkraftwagen), die auch Anhänger ziehen können, sind bereits aus dem Stand der Technik bekannt. Derartige Systeme sind auch mit einer Parkbremsfunktion ausgestattet, die durch eine elektronische Parkbremseinrichtung bereitgestellt werden kann.

Beispielsweise wird in den Vereinigten Staaten von Amerika die Parkbremsfunktion durch Einlegen von Federspeicherbremszylindern sowohl im Nutzfahrzeug bzw. Zugfahrzeug als auch im Anhänger realisiert. Dazu werden die jeweiligen Federspeicher mit einem pneumatischen Parkventil angesteuert, welche die Federspeicher direkt, ohne Verwendung eines Relaisventils, befüllt oder entlüftet. Das Parkventil weist dabei einen ersten Ventilteil für den Lastkraftwagen und einen zweiten Ventilteil für den Anhänger auf. Diese können farblich unterschiedlich ausgestaltet sein, beispielsweise dass der erste Ventilteil für das Zugfahrzeug einen gelben Betätigungsknopf und der zweite Ventilteil für den Anhänger einen roten Betätigungsknopf aufweist. Aufgrund gesetzlicher Vorschriften kann es notwendig sein, dass die Bremseinrichtung ein Zugwagenschutzventil aufweist. Das Zugwagenschutzventil verhindert ein Abfallen des ausgesteuerten Luftdrucks für die Betriebsbremse des Zugfahrzeugs bei einem Druckabfall der Betriebsbremse des Anhängerfahrzeugs.

Hierbei wird davon ausgegangen, dass Druckluft ggf. sowohl aus der Druckluftleitung, welche dem Anhängerfahrzeug Druckluft für die Betriebsbremse bereitstellt, als auch aus der Druckluftleitung, welche dem Anhängerfahrzeug Druckluft für die Parkbremse bereitstellt, entweicht.

Dies ist beispielsweise dann der Fall, wenn sich das Anhängerfahrzeug vom Zugfahrzeug löst und dabei beide Druckluftleitungen, welche das Zugfahrzeug und das Anhängerfahrzeug verbinden, abreißen.

In anderen Ländern wird ein derartiges Zugwagenschutzventil nicht verwendet, stattdessen werden bistabile Ventileinheiten verwendet, wie dies beispielsweise aus der DE 10 2008 007 877 B3 bekannt ist.

Wie dies insbesondere aus der WO 2008/025398 A1 bekannt ist, werden Bistabil-Ventile im Zusammenhang mit der Verwendung von Zugwagen-Schutzventilen abgelehnt, und stattdessen anderweitig sichergestellt, dass auch im Falle eines Ausfalls der elektrischen Spannungsversorgung ein sicheres Abstellen des Fahrzeugs ermöglicht wird.

Weitere pneumatische Bremseinrichtungen für Nutzfahrzeuge mit einem Zugwagen-Schutzventil sind beispielsweise aus der DE 101 32 493 A1, der WO 00/78591 A1, der WO 2009/046779 A1 und der US 5,061,015 bekannt.

Aus der DE 10 2005 058 799 A1 ist eine elektropneumatische Bremssteuerungseinrichtung zur Steuerung einer Feststellbremse eines Fahrzeugs mit Betriebsbremse und Feststellbremse bekannt. Dabei weist die Betriebsbremse ein Bremspedal und in Wirkverbindung mit dem Bremspedal stehende druckluftbetätigbare Bremszylinder zur Betätigung von Radbremsen auf, wobei wenigstens ein Bremszylinder als Federspeicherbremszylinder ausgebildet ist und der Federspeicher Teil des Federspeicherbremszylinders die Feststellbremse betätigt und wobei die Bremssteuerungseinrichtung derart ausgebildet ist, dass beim Ausfall der elektrischen Energieversorgung der Federspeicherteil des Federspeicherbremszylinders durch Betätigen des Bremspedals dauerhaft entlüftbar ist, um ein Parkzustand der Feststellbremse herzustellen.

Aus der DE 10 2010 011 978 A1 ist ein elektrisch betätigbares Feststellbremssystem bekannt für eine pneumatische Bremsanlage, mit einer einen Steuerkolben aufweisenden Ventilsteuereinrichtung, wobei das Feststellbremssystem mindestens zwei Betriebszustände einnehmen kann, nämlich einen Parkzustand oder einen Fahrzeugzustand, die Betriebszustände selektiv in Abhängigkeit einer Stellung des Steuerkolbens einnehmbar sind und der Parkzustand vorliegt, wenn der Steuerkolben durch die Kraft einer in einem Federraum angeordneten Feder in eine Endlage gezwungen ist. Weiter ist dabei vorgesehen, dass aus einem Entlüftungsanschluss der Steuerventileinrichtung austretende Leckluft in den Federraum rückführbar ist.

Aus der EP 0 976 636 A2 ist eine Druckversorgungseinrichtung für Fahrzeugdruckluftanlagen mit einem Lufttrockner, einem Mehrkreisschutzventil, das Überströmventile mit wenigstens einem Ausgang, an dem ein Ausgangsdruck anliegt, bekannt. Dabei ist vorgesehen, dass die Ausgangsdrücke der Überströmventile über einen Flansch in den Lufttrockner nachgeführt werden und dort mittels Drucksensoren in elektrische Signale wandelbar sind und der Elektronikvorrichtung zuführbar sind.

Es ist die Aufgabe der vorliegenden Erfindung, eine pneumatische Bremseinrichtung für ein Nutzfahrzeug der eingangs genannten Art in vorteilhafter Weise weiterzubilden, insbesondere dahingehend, dass diese vergleichsweise einfach und sicher aufgebaut ist und im Vergleich zu den aus dem Stand der Technik bekannten Bremseinrichtungen zusätzliche Sicherheitsvorkehrungen aufweisen kann und betriebsstabil im Fahrzustand als auch im Bremszustand ist.

Diese Aufgabe wird erfindungsgemäß gelöst durch eine pneumatische Bremseinrichtung mit den Merkmalen des Anspruchs 1.

Danach ist vorgesehen, dass eine pneumatische Bremseinrichtung für ein Nutzfahrzeug mit wenigstens einem pneumatisch ansteuerbaren Federspeicher für eine Parkbremse des Nutzfahrzeugs und mit wenigstens einer elektronischen Parkbremseinrichtung versehen ist, weiter mit wenigstens einer Steuerelektronik, wenigstens einer ersten bistabilen Ventileinheit und mit wenigstens einer zweiten bistabilen Ventileinheit, wenigstens weiter mit einer ersten Ventileinrichtung, die derart verschaltbar ist, dass bei einem Absinken des Systemdrucks zur Versorgung einer Parkbremse eines Anhängers des Zugfahrzeugs die Parkbremse des Anhängers aktivierbar ist, und mit einem Zugfahrzeug-Schutzventil.

Die Erfindung basiert auf dem Grundgedanken, durch die Verwendung von bistabilen Ventileinheiten eine Funktionalität in einer pneumatischen Bremseinrichtung für ein Nutzfahrzeug bereitzustellen, so dass auch ohne Elektrizität die aktuelle Stellung der Bremseinrichtung, also Fahren oder Parken beibehalten wird. Mittels dieser beiden bistabilen Ventileinheiten sollen dann die Federspeicher des Nutzfahrzeugs (Zugfahrzeugs) und auch des Anhängers belüftet oder entlüftet werden können. Unter dem Begriff bistabile Ventileinheit im Sinne der Erfindung ist insbesondere eine pneumatisch und/oder elektrisch/elektronisch ansteuerbare Ventileinheit zu verstehen, nicht aber ein Steuerschalter, der pneumatisch oder elektrisch eine Bremseinrichtung bzw. eine Parkbremseinrichtung ansteuert. Zusätzlich ist eine Ventileinrichtung vorgesehen, mittels derer bei belüfteten Federspeichern des Lastkraftwagens (Zugfahrzeug) die Federspeicher des Anhängers entlüftet werden können. Dies beinhaltet insbesondere auch eine Notbremse-Funktionalität, die beim Absinken des Systemdrucks für den Anhänger unter einen bestimmten Schwellenwert die Parkbremse des Anhängers aktiviert (Emergency Braking). Des Weiteren ist ein Zugwagen-Schutzventil vorgesehen, mittels dessen ein Abfallen des ausgesteuerten Luftdrucks für die Betriebsbremse des Zugfahrzeugs beim Druckabfall des ausgesteuerten Luftdrucks für die Betriebsbremse des Anhängers verhindert wird. Mit anderen Worten ist das Zugwagen-Schutzventil derart angeordnet, dass die Druckluftverbindung zwischen Zugfahrzeug und Anhängerfahrzeug notfalls unterbrochen werden kann.

Des Weiteren ist erfindungsgemäß vorgesehen, dass mittels der ersten bistabilen Ventileinheit die Parkbremse des Zugfahrzeugs und mittels der zweiten bistabilen Ventileinheit die Parkbremse des Anhängers ansteuerbar ist. Hierdurch wird ein einfacher Aufbau der Parkbremseinrichtung möglich.

Dadurch, dass eine erste bistabile Ventileinheit für das Zugfahrzeug und eine zweite bistabile Ventileinheit für den Anhänger vorgesehen ist, wird insgesamt ein stabiler und robuster Aufbau der Bremseinrichtung bzw. der Parkbremseinrichtung bereitgestellt. Denn durch die Verwendung der bistabilen Ventileinheiten wird es möglich, die jeweils aktuelle Stellung auch ohne Elektrizität beibehalten zu können, so dass stabile Betriebszustände möglich sind, hier insbesondere Parken und Fahren.

Das Zugfahrzeug-Schutzventil kann Bestandteil der elektronischen Parkbremseinrichtung sein.

Alternativ kann vorgesehen sein, dass das Zugfahrzeug-Schutzventil Bestandteil einer Luftaufbereitungsanlage der pneumatischen Bremseinrichtung ist.

Die Ventileinrichtung kann wenigstens einen Drucksensor aufweisen, mittels dessen ein Druckabfall des Systemdrucks unter einen vorgegebenen Schwellenwert ermittelbar und ein Signal generierbar ist, anhand dessen mittels der Steuerelektronik die Parkbremse des Anhängers aktivierbar ist. Hierdurch kann einfach und zuverlässig festgestellt werden, ob es zu einem Absinken des Systemdrucks im Anhänger gekommen ist und dort der Druck unter einen bestimmten Schwellenwert gefallen ist. Sodann kann die Parkbremse des Anhängers aktiviert werden. Diese Funktion wird auch Emergency Braking genannt.

Des Weiteren kann vorgesehen sein, dass die Ventileinrichtung wenigstens ein pneumatisches Ventil aufweist, mittels dessen die Parkbremse des Anhängers aktivierbar ist. Dadurch wird es möglich, unabhängig von der Bremseinrichtung des Zugfahrzeugs die Parkbremse des Anhängers gesondert zu aktivieren.

Die erste und/oder zweite bistabile Ventileinheit kann ein bistabiles Ventil mit Rückkopplung umfassen. Durch die Rückkopplung lässt sich beispielsweise erreichen, dass eine Notbremsfunktion für den Anhänger integriert werden kann.

In diesem Zusammenhang kann vorgesehen sein, dass das bistabile Ventil mit Rückkopplung ein Relaisventil ist. Insbesondere kann hier vorgesehen sein, dass eine bistabile Ventilfunktion durch die Nutzung eines Relaisventils als bistabiles Ventil erreicht wird.

Des Weiteren kann vorgesehen sein, dass für die erste bistabile Ventileinheit das Relaisventil das Relaisventil des Nutzfahrzeugs ist. Hierdurch wird es möglich, ein ohnehin vorhandenes Ventil wie das Relaisventil des Zugfahrzeugs für die Ausbildung der Bistabilität und der entsprechenden Funktionalität, die durch eine bistabile Ventileinheit erreicht werden soll, zu erreichen.

Außerdem kann vorgesehen sein, dass für die zweite bistabile Ventileinheit das Relaisventil das Relaisventil des Anhängers ist. Auch hier gilt, dass durch einen derartigen Aufbau ein bereits vorhandenes Ventil verwendet werden kann, wodurch der Aufbau insgesamt vereinfacht wird.

Des Weiteren kann vorgesehen sein, dass die bistabile Ventileinheit weiter eine Drossel aufweist.

Mittels der Drossel kann der Volumenstrom der Rückkopplung vom Ausgang des Relaisventils zu dessen Steuerseite begrenzt werden. Hierdurch wird es möglich, die Schaltpunkte des Relaisventils besser einstellen zu können.

Des Weiteren kann vorgesehen sein, dass die bistabile Ventileinheit weiter einen Drucksensor aufweist. Hierdurch wird es möglich, beispielsweise in Abhängigkeit der ermittelten Druckwerte mittels des Drucksensors ein gewisses Schaltverhalten der bistabilen Ventileinheit einzustellen und eine entsprechende Funktionalität bereitzustellen.

Des Weiteren kann vorgesehen sein, dass die bistabile Ventileinheit weiter wenigstens zwei Magnetventile aufweist. Mittels einer Verschaltung mit zwei Magnetventilen wird es beispielsweise möglich, z.B. das Relaisventil entsprechend anzusteuern und in einer einfachen und zuverlässigen Art und Weise eine Bistabilität herbeizuführen.

Die Ventileinrichtung kann durch das Relaisventil des Anhängers mit ausgebildet sein.

Denkbar ist in diesem Zusammenhang auch, dass die Ventileinrichtung durch das Relaisventil des Anhängers und zwei Magnetventile ausgebildet wird. Der Begriff Ventileinheit ist hier insbesondere dahingehend zu verstehen, dass mehrere Komponenten einer pneumatischen Bremseinrichtung funktional miteinander zusammenwirken. Durch das Zusammenwirken des Relaisventils des Anhängers sowie der Magnetventile wird es möglich, die Parkbremseinrichtung des Anhängers, d.h. die Federspeicher des Anhängers anzusteuern und dies gesondert von der Parkbremseinrichtung des Zugfahrzeugs. Dies bedeutet, dass es auch bei entlüfteten Federspeichern des Zugfahrzeugs möglich ist, die Federspeicher des Anhängers belüften zu können.

Des Weiteren kann vorgesehen sein, dass die Ventileinrichtung das Relaisventils des Anhängers, wenigstens zwei weitere Magnetventile sowie einen Drucksensor und eine Drossel aufweist. Auch hier ist der Begriff Ventileinrichtung dahingehend zu verstehen, dass für eine bestimmte Funktionalität mehrere Komponenten miteinander zusammenwirken. Durch das Zusammenwirken des Relaisventils des Anhängers, wenigstens weiterer zweier Magnetventile sowie eines Drucksensors wird es möglich, zum einen ein Absinken des Systemdrucks für die Parkbremse des Anhängers und einen bestimmten Schwellenwert zu detektieren und in Abhängigkeit hiervon, insbesondere im Zusammenwirken mit der Steuerelektronik der pneumatischen Bremseinrichtung das Relaisventil und die weiteren zwei Magnetventile derart zu schalten, dass die Parkbremse des Anhängers aktiviert werden kann, was als Notbremse genutzt werden kann. Mittels des Drucksensors kann insbesondere die Zuleitung stromabwärts des Relaisventils des Anhängers zu den Federspeichern des Anhängers überwacht werden.

Die Ventileinrichtung kann ferner das Relaisventil des Anhängers und wenigstens ein Entlüftungsventil aufweisen. Über die Entlüftung wird es möglich, die Federspeicher des Anhängers mittels des Entlüftungsventils entlüften zu können.

Alternativ ist auch denkbar, dass die erste und/oder zweite bistabile Ventileinheit ein bistabiles Ventil ohne Rückkopplung umfasst.

Insbesondere ist in diesem Zusammenhang denkbar, dass das bistabile Ventil der bistabilen Ventileinheit ohne Rückkopplung ein bistabiles 3/2-Wegeventil ist, das ein Relaisventil ansteuert.

Das bistabile Ventil kann ein Relaisventil sein.

Insbesondere kann vorgesehen sein, dass die bistabile Ventileinheit weiter das Relaisventil des Zugfahrzeugs umfasst. Denkbar ist in diesem Zusammenhang auch, dass das Relaisventil des Zugfahrzeugs sowie ein weiteres Steuerventil gemeinsam in funktionaler Hinsicht die bistabile Ventileinheit ausbilden.

Des Weiteren kann vorgesehen sein, dass für die zweite bistabile Ventileinheit das Relaisventil das Relaisventil des Anhängers ist.

Die erste und/oder zweite bistabile Ventileinheit kann weiter eine Drossel aufweisen. Hierdurch wird es möglich, die erste und/oder zweite bistabile Ventileinheit hinsichtlich ihres Schaltpunkts besser einstellen zu können.

Darüber hinaus kann vorgesehen sein, dass die bistabile Ventileinheit weiter einen Drucksensor aufweist. Mittels des Drucksensors kann beispielsweise ein Druckabfall im Anhänger detektiert werden und mittels entsprechender Ventile, insbesondere Magnetventile, sowie des bzw. der Relaisventile kann sodann eine Schaltung herbeigeführt werden, mittels derer die Federspeicher z.B. des Anhängers entlüftet werden können.

Grundsätzlich ist denkbar, dass mittels eines Drucksensors ein Druckabfall registriert wird, worauf die Federspeicher des Anhängers mittels eines elektrischen Signals und mittels wenigstens eines Magnetventils entlüftet werden.

Denkbar ist in diesem Zusammenhang insbesondere, dass die bistabile Ventileinheit weiter wenigstens zwei Magnetventile aufweist.

Alternativ und/oder zusätzlich kann auch eine Lösung vorgesehen sein, bei der mittels eines pneumatischen Ventils die Federspeicher des Anhängers entlüftet werden, wenn mittels der zweiten Ventileinrichtung ein Absinken des Systemdrucks für den Anhänger unter einen bestimmten Schwellenwert detektiert wird, so dass die Parkbremse des Anhängers aktiviert wird (Notbremsung).

Die Ventileinrichtung kann durch das Relaisventil des Anhängers mit ausgebildet sein.

Weiter kann vorgesehen sein, dass die Ventileinrichtung weiter wenigstens ein Magnetventil und einen Drucksensor aufweist. Außerdem kann die Ventileinrichtung auch weiter eine Drossel aufweisen.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Zeichnung eines erfindungsgemäßen Ausführungsbeispiels einer pneumatischen Bremseinrichtung für ein Nutzfahrzeug;
- Fig. 2: eine schematische Darstellung einer ersten Ausführungsform einer elektronischen Parkbremseinrichtung;
- Fig. 3: eine schematische Darstellung einer zweiten Ausführungsform einer elektronischen Parkbremseinrichtung;
- Fig. 4: eine schematische Darstellung einer dritten Ausführungsform einer elektronischen Parkbremseinrichtung;
- Fig. 5: eine schematische Darstellung einer vierten Ausführungsform einer elektronischen Parkbremseinrichtung;
- Fig. 6: eine schematische Darstellung einer fünften Ausführungsform einer elektronischen Parkbremseinrichtung; und
- Fig. 7: eine schematische Darstellung einer sechsten Ausführungsform einer elektronischen Parkbremseinrichtung.

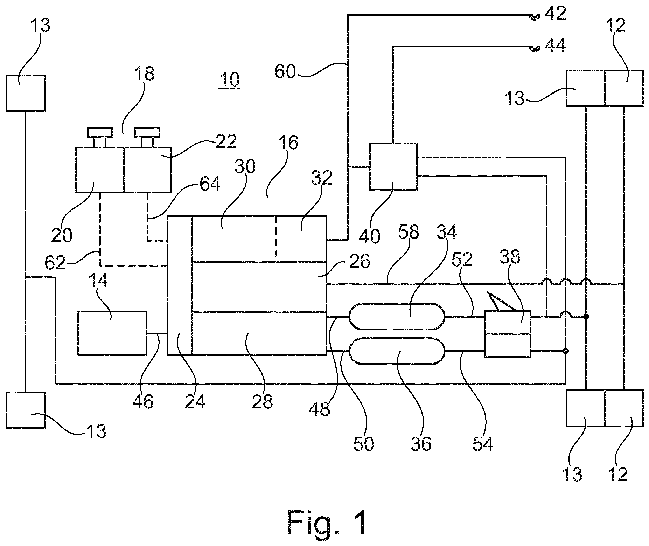

**Fig. 1** zeigt eine pneumatische Bremseinrichtung 10 für ein Nutzfahrzeug, beispielsweise einen Lastkraftwagen (nicht näher dargestellt).

Die pneumatische Bremseinrichtung 10 weist mehrere pneumatisch ansteuerbare Federspeicher 12 für die Parkbremse des Nutzfahrzeugs, auch Zugfahrzeug genannt, sowie pneumatisch ansteuerbare Bremszylinder 13 der Betriebsbremse für die Vorderachse als auch für die Hinterachse bzw. die Hinterachsen auf. Im gezeigten Ausführungsbeispiel sind an der Hinterachse der Federspeicher 12 und der Bremszylinder 13 als Federspeicherbremszylinder ausgeführt, mit dem Federspeicher 12 für die Parkbremsfunktion und mit dem Bremszylinder 13 für die Betriebsbremse.

Weiter ist ein Kompressor 14 vorgesehen, der mit einer elektronischen Parkbremseinrichtung 16 in Verbindung steht.

Weiter ist ein Parkventilschaltelement 18 vorgesehen, das einen ersten Schalter 20 und einen zweiten Schalter 22 aufweisen kann.

Die elektronische Parkbremseinrichtung 16 weist eine Steuerelektronik 24, eine erste bistabile Ventileinheit 26, eine Luftaufbereitung 28 sowie eine zweite bistabile Ventileinheit 30 und eine Ventileinrichtung 32 auf. Stromabwärts der elektronischen Parkbremseinrichtung 16 sind ein erster Druckluftbehälter 34 und ein zweiter Druckluftbehälter 36 vorgesehen.

Ferner ist das Fußbremsventil 38 der Bremseinrichtung 10 gezeigt. Darüber hinaus ist ein Zugfahrzeug-Schutzventil 40 vorgesehen.

Die pneumatische Bremseinrichtung 10 weist weiter einen Anschluss 42 zur Parkbremse eines Anhängers des Nutzfahrzeugs sowie einen weiteren gesonderten Anschluss 44 zur Betriebsbremse des Anhängers auf.

Der Kompressor 14 ist über eine Leitung 46 mit der Parkbremseinrichtung 16 verbunden. Stromabwärts der Parkbremseinrichtung 16 schließen sich an die Luftaufbereitung 28 Leitungen 48 und 50 an, die zum Behälter 34 bzw. Behälter 36 führen.

Das Fußbremsventil 38 wird über die Leitung 52 mit dem ersten Behälter 34 verbunden und über die Leitung 54 mit dem zweiten Behälter 36. Stromabwärts des Fußbremsventils 38 schließen die Versorgungsleitungen und Leitungszweige zu den Bremszylindern bzw. Federspeicherbremszylindern 12 an. Das Zugfahrzeug-Schutzventil 40 ist ebenfalls an diese Leitung angeschlossen, wobei die Druckluft, die von diesem Leitungszweig zum Zugfahrzeug-Schutzventil 40 strömt und sodann weiter zu dem Anschluss 44 für die Betriebsbremse des Anhängers bzw. zum Anschluss 42 für den Federspeicher des Anhängers strömt, zunächst durch das Zugfahrzeug-Schutzventil 40 hindurch geleitet werden muss. Das Fußbremsventil 38 ist über eine Leitung 56 mit dem Zugfahrzeug-Schutzventil 40 verbunden.

Die erste bistabile Ventileinheit 26 ist über eine Leitung 58 mit den Federspeicherbremszylindern der Hinterachse verbunden.

Die Ventileinrichtung 32 ist über eine Leitung 60 mit dem Anschluss 42 für die Federspeicher des Anhängers verbunden.

Die Steuerelektronik 24 ist mit dem Parkventilschaltelement 18 verbunden, wobei eine erste Signalleitung 62 vom ersten Schalter mit der Steuerelektronik 24 verbunden ist und eine zweite Leitung 64 mit der Elektronik 24 verbunden ist, die eine Verbindung mit dem zweiten Schalter des Parkventilschaltelements 18 herstellt.

Die pneumatische Bremseinrichtung 10 weist somit mehrere pneumatisch ansteuerbare Federspeicher 12 für die Parkbremse des Nutzfahrzeugs auf sowie eine elektronische Parkbremseinrichtung 16 auf, die selbst wiederum eine Steuerelektronik 24 aufweist.

Darüber hinaus ist Bestandteil der elektronischen Parkbremseinrichtung 16 eine erste bistabile Ventileinheit 26 zum Belüften bzw. Entlüften der Federspeicher 12 der Parkbremse des Zugfahrzeugs, sowie eine zweite bistabile Ventileinheit 30 zum Belüften bzw. Entlüften der Federspeicherbremszylinder des Anhängers, so dass mittels der zweiten bistabilen Ventileinheit 30 die Federspeicher der Parkbremseinrichtung des Anhängers des Zugfahrzeugs belüftbar sind sowie eine Ventileinrichtung 32, die derart verschaltbar ist, dass bei einem Absinken des Systemdrucks für die Parkbremse des Anhänger des Zugfahrzeugs die Parkbremseinrichtung des Anhängers aktivierbar ist.

Mittels der ersten bistabilen Ventileinheit 26 ist die Parkbremse des Zugfahrzeugs mit den Federspeichern 12 und mit der zweiten bistabilen Ventileinheit 30 die Parkbremse des Anhängers ansteuerbar, auch über die Ventileinrichtung 32. Über die Leitung 60 ist die zweite bistabile Ventileinheit 30 mit dem Anschluss 42 zu den Federspeicherbremszylindern der Parkbremse des Anhängers verbunden.

Das Zugfahrzeug-Schutzventil 40 ist hier Bestandteil der Bremseinrichtung, kann jedoch alternativ auch als Bestandteil der elektronischen Parkbremseinrichtung 16 ausgeführt sein oder als Bestandteil der Luftaufbereitungsanlage 28 der pneumatischen Bremseinrichtung 10.

Die Funktion der pneumatischen Bremseinrichtung 10 ist hier wie folgt:
Die elektronische Parkbremseinrichtung 16 umfasst eine Steuerelektronik 24 und verarbeitet die Steuersignale, die vom elektronischen Parkventil 18 übermittelt werden.

Darüber hinauf findet ein Informationsaustausch mit der Steuerelektronik 24 des Lastkraftwagens statt (nicht im Detail gezeigt).

Die erste bistabile Ventileinheit 26 und die zweite bistabile Ventileinheit 30 behalten auch ohne Elektrizität jeweils ihre aktuelle Stellung bei. Diese Ventile können direkt oder über ein oder mehrere Relaisventile gemeinsam die Federspeicherbremszylinder 12 des Zugfahrzeugs oder des Anhängers (über die Leitung 60 und den Anschluss 42) belüften oder entlüften.

Die zweite bistabile Ventileinheit 30 kann beim entlüfteten Federspeicher des Lastkraftwagens die Federspeicher des Anhängers belüften. Dies ist beispielsweise für die Trailertest-Funktion notwendig.

Die Ventileinrichtung 32 kann bei belüfteten Federspeichern des Lastkraftwagens die Federspeicher des Anhängers entlüften, und zwar über die Leitung 60 und den Anschluss 42. Dies beinhaltet insbesondere eine Notbremse-Funktionalität, die beim Absinken des Systemdrucks für den Anhänger unter einen bestimmten Schwellenwert die Parkbremse des Anhängers aktiviert (sog. Emergency Braking Funktion).

Die Ansteuerung der Bremseinrichtung 10 über das Parkventilschaltelement 18 mit den Schaltern 20 und 22 kann für die folgenden Betriebszustände wie folgt erfolgen:
Im Fahrzustand sind beispielsweise der Schalter 20 zur Betätigung der Parkbremseinrichtung des Zugfahrzeugs und der Schalter 22 zur Betätigung der Parkbremseinrichtung des Anhängers gedrückt (alternativ auch andere Betätigungsstellungen denkbar).

Dadurch wird die erste bistabile Ventileinheit 26 und die zweite bistabile Ventileinheit 30 durchgeschaltet während die Ventileinrichtung 32 nicht durchgeschaltet sind.

Dadurch sind sowohl die Federspeicherbremszylinder 12 des Zugfahrzeugs als auch die Federspeicherbremszylinder 12 des Anhängers freigegeben.

Im Parkzustand sind die beiden Schalter 20 und 22 gezogen, so dass die erste bistabile Ventileinheit 26 und die zweite bistabile Ventileinheit 30 und die Ventileinrichtung 32 nicht durchgeschaltet sind.

Somit sind die Federspeicherbremszylinder 12 des Zugfahrzeugs derart geschaltet, dass die Bremsen des Zugfahrzeugs aktiviert sind. Dies gilt auch für die Federspeicherbremszylinder 12 des Anhängers, die ebenfalls derart geschaltet sind, dass die Bremsen des Anhängers aktiviert sind.

Für die Befüllung des Anhängers kann ein Betriebszustand genutzt werden, bei dem die Parkbremse des Zugfahrzeugs aktiviert ist, die des Anhängers aber nicht. Das kann auch auch genutzt werden, um den sogenannten Trailer-Test durchzuführen. Es ist der Schalter 20 gezogen und der Schalter 22 eingedrückt (aktiviert). Dadurch ist die erste bistabile Ventileinheit 26 nicht durchgeschaltet, aber die zweite bistabile Ventileinheit 30. Die Ventileinrichtung 32 ist ebenfalls nicht durchgeschaltet.

Dies hat zur Folge, dass die Federspeicher 12 der Parkbremse des Zugfahrzeugs derart geschaltet sind, dass das Zugfahrzeug gebremst ist und die Federspeicher der Parkbremse des Anhängers derart geschaltet sind, dass diese freigegeben sind.

Bei dem Betriebszustand Anhänger Parken (Bremsung nur über Anhänger), ist der Schalter 20 gedrückt und der Schalter 22 gezogen.

Folglich ist die erste bistabile Ventileinheit 26 aktiviert, die zweite bistabile Ventileinheit 30 nicht aktiviert und die Ventileinrichtung 32 nicht aktiviert.

Dies hat zur Folge, dass die Federspeicher 12 der Parkbremse des Zugfahrzeugs derart geschaltet sind, dass das Zugfahrzeug ungebremst ist und die Federspeicher der Parkbremse des Anhängers aktiviert sind, so dass der Anhänger gebremst wird.

Bei dem Betriebszustand Notbremsung, der automatisch aktiviert wird, nämlich dann, wenn ein Absinken des Systemdrucks für die Parkbremse des Anhänger detektiert wird, befindet sich üblicherweise das Fahrgespann, bestehend aus Zugfahrzeug und Anhänger, im Fahrzustand, d.h. der Schalter 20 und der Schalter 22 sind beide gedrückt. Abweichend zum vorbeschriebenen Fahrzustand, bei dem die erste bistabile Ventileinheit 26 und die zweite bistabile Ventileinheit 30 durchgeschaltet sind, jedoch nicht die Ventileinrichtung 32, wird nun die Ventileinrichtung 32 aktiviert und die zweite bistabile Ventileinheit 30 vom durchgeschalteten Zustand in den nicht durchgeschalteten Zustand überführt.

Dadurch wird erreicht, dass die Federspeicher12 der Parkbremse des Zugfahrzeugs weiterhin derart geschaltet sind, dass das Zugfahrzeug ungebremst ist, jedoch die Federspeicherbremszylinder des Anhängers derart geschaltet werden, dass sie vom ungebremsten Zustand in den gebremsten Zustand geschaltet werden.

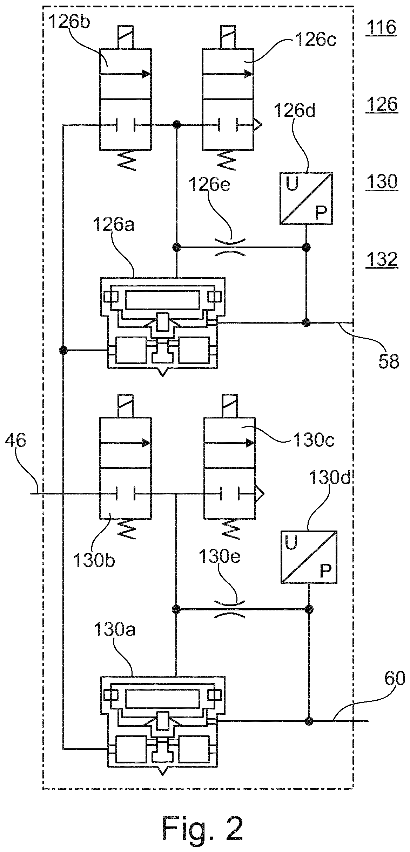

Die **Figuren 2 bis 5** betreffen mögliche Ausführungsformen der elektronischen Parkbremseinrichtung mit Rückkopplung, wie sie bei dem in Fig. 1 gezeigten Ausführungsbeispiel einer pneumatischen Bremseinrichtung 10 eingesetzt werden können.

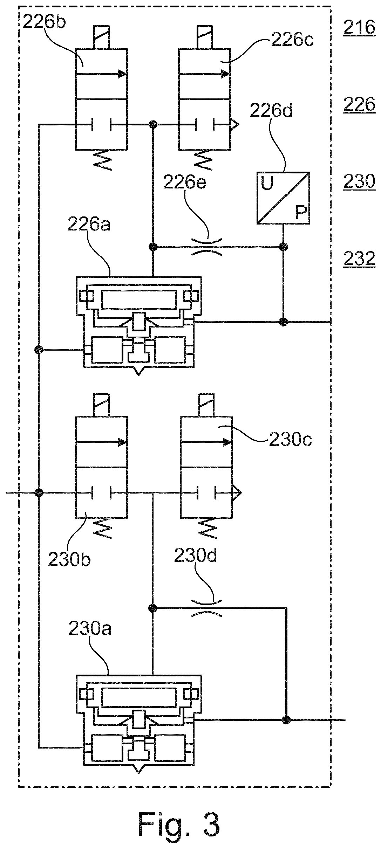

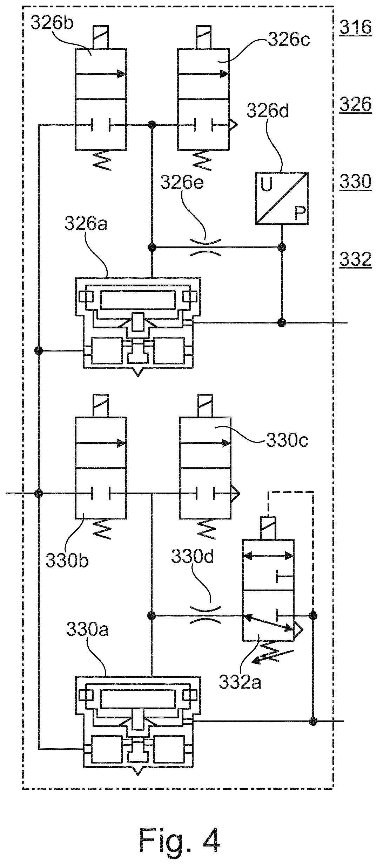

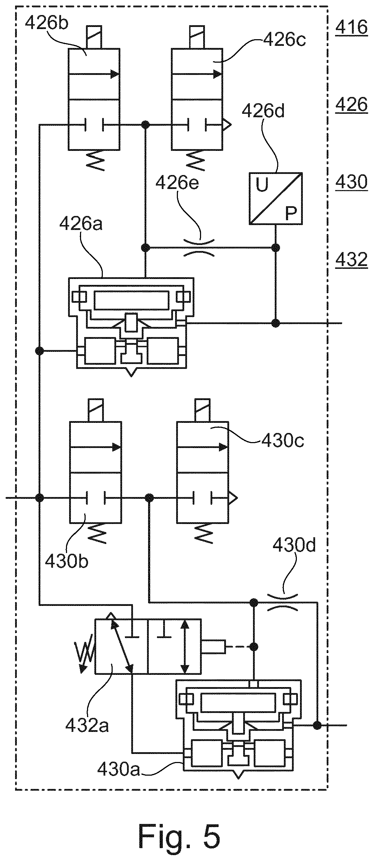

Jede der gezeigten Ausführungsformen der elektronischen Parkbremseinrichtungen 116 (Fig. 2), 216 (Fig. 3), 316 (Fig. 4) und 416 (Fig. 5) ist als mögliche Ausführungsform der elektronischen Parkbremseinrichtung 16, wie grob schematisch in Fig. 1 gezeigt, zu verstehen.

Fig. 2 zeigt eine erste mögliche Ausführungsform einer elektronischen Parkbremseinrichtung 116 mit einer bistabilen Ventileinheit 126 mit Rückkopplung.

Die bistabile Ventileinheit 126 mit Rückkopplung besteht aus den funktional zusammen wirkenden Relaisventil des Zugfahrzeugs 126a, einem Magnetventil 126b, einem weiteren Magnetventil 126c, einem Drucksensor 126d sowie einer Drossel 126e.

Die zweite bistabile Ventileinheit 130 besteht aus den funktional zusammen wirkenden Relaisventil des Anhängers 130a, einem Magnetventil 130b, einem weiteren Magnetventil 130c, einem Drucksensor 130d und einer Drossel 130e.

Die Ventileinrichtung 132 ist funktional ausgebildet durch das Relaisventil des Anhägers 130a, das Magnetventil 130c, den Drucksensor 130d sowie die Drossel 130e.

Sowohl für die erste bistabile Ventileinheit 126, die zweite bistabile Ventileinheit 130 und die Ventileinrichtung 132 dienen die Magnetventile, der Drucksensor sowie die Drosseln zur Ansteuerung bzw. Einstellung der Relaisventile, der Einstellung der Schaltpunkte sowie zur Gewährleistung einer bistabilen Funktion.

Fig. 3 zeigt in schematischer Ansicht ein weiteres Ausführungsbeispiel einer elektronischen Parkbremseinrichtung 216, die eine mögliche Ausführungsform der in Fig. 1 gezeigten Parkbremseinrichtung 16 darstellt.

Die elektronische Parkbremseinrichtung 216 gemäß Fig. 3 ist eine Ausführungsform mit Drucksensor, aber ohne Zusatzelemente.

Die erste bistabile Ventileinheit 226 wird ausgebildet durch das Relaisventil des Zugfahrzeugs 226a, ein Magnetventil 226b, ein weiteres Magnetventil 226c, einen Drucksensor 226d und eine Drossel 226e.

Die zweite bistabile Ventileinheit 230 wird ausgebildet durch das Relaisventil des Anhängers 230a, ein Magnetventil 230b, ein weiteres Magnetventil 230c sowie eine Drossel 230d ausgebildet.

Die Ventileinrichtung 232 wird hier lediglich ausgebildet durch durch das Relaisventil des Anhängers 230a und die Drossel 230d.

Auch hier dienen die Magnetventile, der Drucksensor bzw. die Drossel dazu, die bistabile Funktion, die Schaltcharakteristik sowie die Schaltpunkte zu definieren bzw. zu gewährleisten.

Fig. 4 zeigt in schematischer Darstellung ein weiteres Ausführungsbeispiel einer elektronischen Parkbremseinrichtung 316, die in dem Ausführungsbeispiel gemäß Fig. 1 eine mögliche Ausführungsform für die dort gezeigte elektronische Parkbremseinrichung 16 darstellt.

Die erste bistabile Ventileinheit 326 ist hier durch das Relaisventil des Zugfahrzeugs 326a, ein erstes Magnetventil 326b, ein zweites Magnetventil 326c, einen Drucksensor 326d sowie eine Drossel 326e ausgebildet.

Die zweite bistabile Ventileinheit 330 wird ausgebildet durch das Relaisventil des Anhängers 330a, ein Magnetventil 330b, ein weiteres Magnetventil 330c sowie eine Drossel 330d.

Die Ventileinrichtung 332 wird ausgebildet durch das Relaisventil des Anhängers 330a sowie ein Entlüftungsventil 332a.

Bei der Parkbremseinrichtung 316 gemäß Fig. 4 handelt es sich um eine Parkbremseinrichtung mit einem pneumatischen Ventil in der Rückkopplungs-Leitung.

Fig. 5 zeigt eine weitere Ausführungsform einer elektronischen Parkbremseinrichtung 416, die eine mögliche Ausführungsform der in Fig. 1 gezeigten elektronischen Parkbremseinrichtung 16 darstellt.

Dabei handelt es sich um eine Ausführungsform mit einem pneumatischen Ventil in der Versorgungsleitung.

Die erste bistabile Ventileinheit 426 ist hier durch das Relaisventil des Zugfahrzeugs 426a, ein erstes Magnetventil 426b, ein zweites Magnetventil 426c, einen Drucksensor 426d sowie eine Drossel 426e ausgebildet.

Die zweite bistabile Ventileinheit 430 wird ausgebildet durch das Relaisventil des Anhängers 430a, ein Magnetventil 430b, ein weiteres Magnetventil 430c sowie eine Drossel 430d.

Die Ventileinrichtung 432 wird ausgebildet durch das Relaisventil des Anhängers 430a sowie ein Entlüftungsventil 432a.

Das pneumatische Entlüftungsventil 432a befindet sich hier jedoch abweichend zum Ausführungsbeispiel gemäß Fig. 4, wo das pneumatische Entlüftungsventil 332a in der Rückkopplungsleitung für das Relaisventil 330a angeordnet ist, hier in der Versorgungsleitung für das Relaisventil des Anhängers.

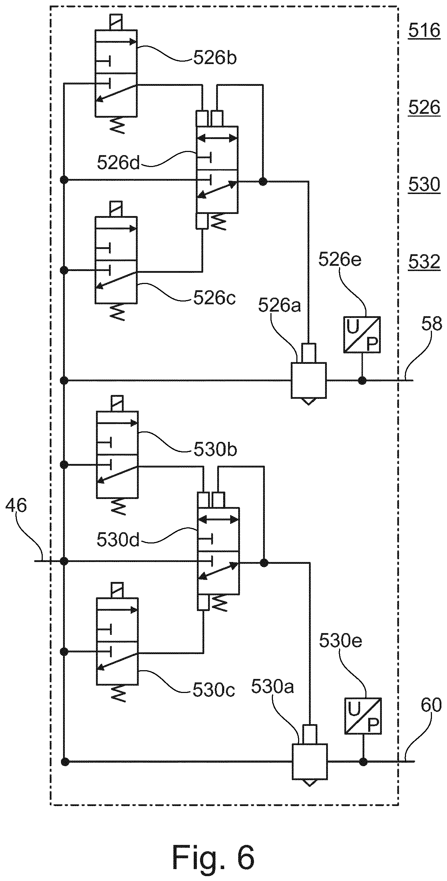

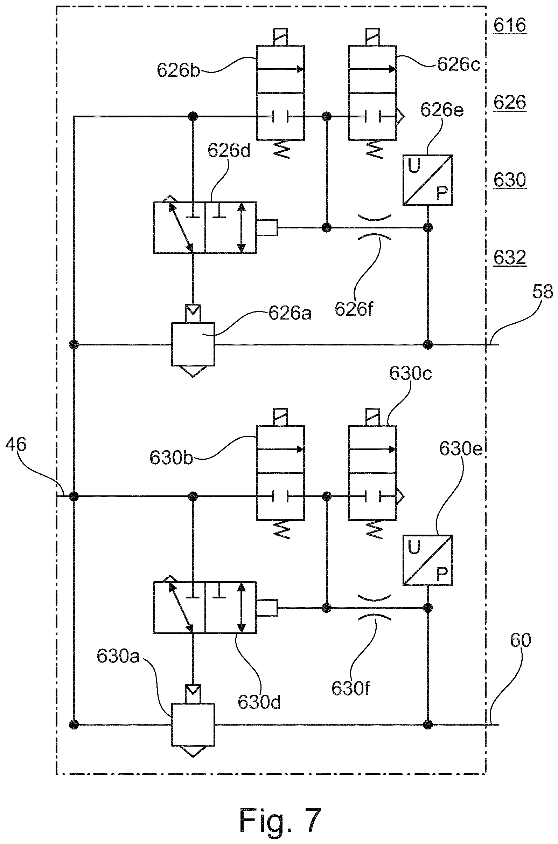

In den **Figuren 6** **und** **7** sind Ausführungsformen einer elektronischen Parkbremseinrichtung 516 (Fig. 6) sowie einer elektronischen Parkbremseinrichtung 616 (Fig. 7) gezeigt.

In beiden Fällen können diese Ausführungsformen eine mögliche Ausgestaltung der in Fig. 1 gezeigten elekronischen Parkbremseinrichtung 16 sein.

Beide Ausführungen einer elektronischen Parkbremseinrichtung 516 bzw. 616 sind Ausführungsformen mit bistabilen Ventileinheiten ohne Rückkopplung.

Bei der elektronischen Parkbremseinrichtung 516 gemäß Fig. 6 wird die erste bistabile Ventileinheit 526 ausgebildet durch das Relaisventil des Zugfahrzeugs 526a, ein Magnetventil 526b, ein weiteres Magnetventil 526c, ein Steuerventileinrichtung 526d sowie einen Drucksensor 526e.

Die zweite bistabile Ventileinheit 530 umfasst das Relaisventil des Anhängers 530a, ein Magnetventil 530b, ein weiteres Magnetventil 530c, ein Steuerventil 530d sowie einen Drucksensor 530e.

Die Ventileinrichtung 532 ist hier gebildet durch das Relaisventil des Anhängers 530a, das Magnetventil 530c, das Steuerventil 530d sowie den Drucksensor 530e.

Bei der elektronischen Parkbremseinrichtung 616 gemäß Fig. 7 wird die erste bistabile Ventileinheit 626 ausgebildet durch das Relaisventil des Zugfahrzeugs 626a, ein Magnetventil 626b, ein weiteres Magnetventil 626c, ein Steuerventileinrichtung 626d sowie einen Drucksensor 626e. Außerdem weist die erste bistabile Ventileinheit 626 in Abgrenzung gegenüber der in Fig. 6 gezeigten Ausführungsform weiter eine Drossel 626f auf.

Die zweite bistabile Ventileinheit 630 umfasst das Relaisventil des Anhängers 630a, ein Magnetventil 630b, ein weiteres Magnetventil 630c, ein Steuerventil 630d sowie einen Drucksensor 630e. Des Weiteren weist die Ausführungsform gemäß Fig. 7 in Abgrenzung zur Ausführungsform gemäß Fig. 6 weiter eine Drossel 630f auf.

Die Ventileinrichtung 632 ist hier gebildet durch das Relaisventil des Anhängers 630a, das Magnetventil 630c, das Steuerventil 630d, den Drucksensor 630e sowie die Drossel 630f.

Fig. 7 zeigt die Parkbremseinrichtung 616 im Parkzustand.

### BEZUGSZEICHENLISTE

- 10: pneumatische Bremseinrichtung
- 12: Federspeicher
- 13: Bremszylinder
- 14: Kompressor
- 16: elektronische Parkbremseinrichtung
- 18: Parkventilschaltelement
- 20: erster Schalter
- 22: zweiter Schalter
- 24: Steuerelektronik
- 26: erste bistabile Ventileinheit
- 28: Luftaufbereitung
- 30: zweite bistabile Ventileinheit
- 32: Ventileinrichtung
- 34: erster Druckluftbehälter
- 36: zweiter Druckluftbehälter
- 38: Fußbremsventil
- 40: Zugfahrzeug-Schutzventil
- 42: Anschluss
- 44: gesonderter Anschluss
- 46: Leitung
- 48: Leitung
- 50: Leitung
- 52: Leitung
- 54: Leitung
- 56: Leitung
- 58: Leitung
- 60: Leitung
- 62: erste Signalleitung
- 64: zweite Signalleitung
- 116: elektronische Parkbremseinrichtung
- 126: erste bistabile Ventileinheit
- 126a: Relaisventil
- 126b: Magnetventil
- 126c: Magnetventil
- 126d: Drucksensor
- 126e: Drossel
- 130: zweite bistabile Ventileinheit
- 130a: Relaisventil des Anhängers
- 130b: erstes Magnetventil
- 130c: zweites Magnetventil
- 130d: Drucksensor
- 130e: Drossel
- 132: Ventileinrichtung
- 132a: Magnetventil
- 132b: Drucksensor
- 216: elektronische Parkbremseinrichtung
- 226: erste bistabile Ventileinheit
- 226a: Relaisventil
- 226b: Magnetventil
- 226c: Magnetventil
- 226d: Drucksensor
- 226e: Drossel
- 230: zweite bistabile Ventileinheit
- 230a: Relaisventil des Anhängers
- 230b: erstes Magnetventil
- 230c: zweites Magnetventil
- 230d: Drossel
- 232: Ventileinrichtung
- 232a: Magnetventil
- 232b: Drucksensor
- 316: elektronische Parkbremseinrichtung
- 326: erste bistabile Ventileinheit
- 326a: Relaisventil des Zugfahrzeugs
- 326b: Magnetventil
- 326c: Magnetventil
- 326d: Drucksensor
- 326e: Drossel
- 330: zweite bistabile Ventileinheit
- 330a: Relaisventil
- 330b: Magnetventil
- 330c: Magnetventil
- 330d: Drossel
- 332: Ventileinrichtung
- 332a: Entlüftungsventil
- 416: elektronische Parkbremseinrichtung
- 426: erste bistabile Ventileinheit
- 426a: Relaisventil des Zugfahrzeugs
- 426b: Magnetventil
- 426c: Magnetventil
- 426d: Drucksensor
- 426e: Drossel
- 430: zweite bistabile Ventileinheit
- 430a: Relaisventil
- 430b: Magnetventil
- 430c: Magnetventil
- 430d: Drossel
- 432: Ventileinrichtung
- 432a: Entlüftungsventil
- 516: elektronische Parkbremseinrichtung
- 526: erste bistabile Ventileinheit
- 526a: Relaisventil
- 526b: Magnetventil
- 526c: Magnetventil
- 526d: Steuerventileinrichtung
- 526e: Drucksensor
- 530: zweite bistabile Ventileinheit
- 530a: Relaisventil
- 530b: Magnetventil
- 530c: Magnetventil
- 530d: Steuerventil
- 530e: Drucksensor
- 532: Ventileinrichtung
- 616: elektronische Parkbremseinrichtung
- 626: erste bistabile Ventileinheit
- 626a: Relaisventil
- 626b: Magnetventil
- 626c: Magnetventil
- 626d: Steuerventileinrichtung
- 626e: Drucksensor
- 626f: Drossel
- 630: zweite bistabile Ventileinheit
- 630a: Relaisventil
- 630b: Magnetventil
- 630c: Magnetventil
- 630d: Steuerventil
- 630e: Drucksensor
- 630f: Drossel
- 632: Ventileinrichtung

## Patentansprüche

1. Pneumatische Bremseinrichtung (10) für ein Nutzfahrzeug mit wenigstens einem pneumatisch ansteuerbaren Federspeicher (12) für eine Parkbremse des Nutzfahrzeugs mit einer elektronischen Parkbremseinrichtung (16), mit wenigstens einer Steuerelektronik (24), wenigstens einer ersten bistabilen Ventileinheit (26) und wenigstens einer zweiten bistabilen Ventileinheit (30), wenigstens eine Ventileinrichtung (32), die derart verschaltbar ist, dass bei einem Absinken des Systemdrucks zur Versorgung einer Parkbremse eines Anhängers des Zugfahrzeugs die Parkbremse des Anhängers aktivierbar ist, und mit Zugfahrzeug-Schutzventil (40), wobei mittels der ersten bistabilen Ventileinheit (26) die Parkbremse des Nutzfahrzeugs und mittels der zweiten bistabilen Ventileinheit (30) die Parkbremse des Anhängers ansteuerbar ist.

2. Pneumatische Bremseinrichtung (10) nach Anspruch 1,
**dadurch gekennzeichnet, dass**
das Zugfahrzeug-Schutzventil (40) Bestandteil der elektronischen Parkbremseinrichtung (16) ist.

3. Pneumatische Bremseinrichtung (10) nach Anspruch 1,
**dadurch gekennzeichnet, dass**
das Zugfahrzeug-Schutzventil (40) Bestandteil einer Luftaufbereitungsanlage (28) der pneumatischen Bremseinrichtung (10) ist.

4. Pneumatische Bremseinrichtung (10) nach einem der vorhergehenden Ansprüche,
**dadurch gekennzeichnet, dass**
die Ventileinrichtung (32) wenigstens einen Drucksensor aufweist, mittels dessen ein Druckabfall des Systemdrucks unter einen vorgegebenen Schwellenwert ermittelbar und ein Signal generierbar ist, anhand dessen mittels der Steuerelektronik (24) die Parkbremse des Anhängers aktivierbar ist.

5. Pneumatische Bremseinrichtung (10) nach einem der vorhergehenden Ansprüche,
**dadurch gekennzeichnet, dass**
die Ventileinrichtung (32) wenigstens ein pneumatisches Ventil aufweist, mittels dessen die Parkbremse des Anhängers aktivierbar ist.

6. Pneumatische Bremseinrichtung (10) nach einem der vorhergehenden Ansprüche,
**dadurch gekennzeichnet, dass**
die erste und/oder zweite bistabile Ventileinheit (26, 30) ein bistabiles Ventil mit Rückkopplung umfasst.

7. Pneumatische Bremseinrichtung (10) nach Anspruch 6,
**dadurch gekennzeichnet, dass**
das bistabile Ventil ein Relaisventil ist.

8. Pneumatische Bremseinrichtung (10) nach Anspruch 7,
**dadurch gekennzeichnet, dass**
für die erste bistabile Ventileinheit (26) das Relaisventil das Relaisventil des Nutzfahrzeugs ist.

9. Pneumatische Bremseinrichtung (10) nach Anspruch 7 oder Anspruch 8,
**dadurch gekennzeichnet, dass**
für die zweite bistabile Ventileinheit (30) das Relaisventil das Relaisventil des Anhängers ist.

10. Pneumatische Bremseinrichtung (10) nach einem der Ansprüche 7 bis 9,
**dadurch gekennzeichnet, dass**
die bistabile Ventileinheit (26, 30) weiter eine Drossel aufweist.

11. Pneumatische Bremseinrichtung (10) nach einem der Ansprüche 7 bis 10,
**dadurch gekennzeichnet, dass**
die bistabile Ventileinheit (26, 30) weiter einen Drucksensor aufweist.

12. Pneumatische Bremseinrichtung (10) nach einem der Ansprüche 7 bis 11,
**dadurch gekennzeichnet, dass**
die bistabile Ventileinheit (26, 30) weiter wenigstens zwei Magnetventile aufweist.

13. Pneumatische Bremseinrichtung (10) nach einem der Ansprüche 7 bis 11,
**dadurch gekennzeichnet, dass**
die Ventileinrichtung (32) durch das Relaisventil des Anhängers mit ausgebildet wird.

14. Pneumatische Bremseinrichtung (10) nach Anspruch 13,
**dadurch gekennzeichnet, dass**
die Ventileinrichtung (32) weiter wenigstens zwei Magnetventile, einen Drucksensor und eine Drossel aufweist.

15. Pneumatische Bremseinrichtung (10) nach einem der Ansprüche 1 bis 5,
**dadurch gekennzeichnet, dass**
die erste und/oder zweite bistabile Ventileinheit (26, 30) ein bistabiles Ventil ohne Rückkopplung umfasst.

16. Pneumatische Bremseinrichtung (10) nach Anspruch 15,
**dadurch gekennzeichnet, dass**
das bistabile Ventil (26, 30) ein bistabiles 3/2-Wegeventil ist, das ein Relaisventil ansteuert.

17. Pneumatische Bremseinrichtung (10) nach Anspruch 15 oder Anspruch 16,
**dadurch gekennzeichnet, dass**
das bistabile Ventil (26, 30) ein Relaisventil ist.

18. Pneumatische Bremseinrichtung (10) nach Anspruch 17,
**dadurch gekennzeichnet, dass**
für die erste bistabile Ventileinheit (26) das Relaisventil das Relaisventil des Nutzfahrzeugs ist.

19. Pneumatische Bremseinrichtung (10) nach Anspruch 17 oder Anspruch 18,
**dadurch gekennzeichnet, dass**
für die zweite bistabile Ventileinheit (30) das Relaisventil das Relaisventil des Anhängers ist.

20. Pneumatische Bremseinrichtung (10) nach einem der Ansprüche 17 bis 19,
**dadurch gekennzeichnet, dass**
die bistabile Ventileinheit (26, 30) weiter eine Drossel aufweist.

21. Pneumatische Bremseinrichtung (10) nach einem der Ansprüche 17 bis 20,
**dadurch gekennzeichnet, dass**
die bistabile Ventileinheit (26, 30) weiter einen Drucksensor aufweist.

22. Pneumatische Bremseinrichtung (10) nach einem der Ansprüche 17 bis 21,
**dadurch gekennzeichnet, dass**
die bistabile Ventileinheit (26, 30) weiter wenigstens zwei Magnetventile aufweist.

23. Pneumatische Bremseinrichtung (10) nach einem der Ansprüche 17 bis 22,
**dadurch gekennzeichnet, dass**
die Ventileinrichtung (32) durch das Relaisventil des Anhängers mit ausgebildet wird.

24. Pneumatische Bremseinrichtung (10) nach Anspruch 23,
**dadurch gekennzeichnet, dass**
die Ventileinrichtung (32) weiter wenigstens ein Magnetventil und einen Drucksensor aufweist.

25. Pneumatische Bremseinrichtung (10) nach Anspruch 24,
**dadurch gekennzeichnet, dass**
die Ventileinrichtung (32) weiter wenigstens eine Drossel aufweist.

## Claims

1. Pneumatic brake device (10) for a utility vehicle with at least one pneumatically controlled spring mechanism (12) for a parking brake of the utility vehicle, with an electronic parking brake device (16), with at least one electronic control unit (24), at least one first bistable valve unit (26) and at least one second bistable valve unit (30), at least one valve device (32) which is connected up in such manner that in the event of a fall of the system pressure for supplying a parking brake of a trailer of the tractor vehicle the parking brake of the trailer can be actuated, and with a tractor vehicle protection valve (40), wherein by means of the first bistable valve unit (26) the parking brake of the utility vehicle can be controlled and by means of the second bistable valve unit (30) the parking brake of the trailer can be controlled.

2. Pneumatic brake device (10) according to Claim 1,
**characterised in that**
the tractor vehicle protection valve (40) is part of the electronic parking brake device.

3. Pneumatic brake device (10) according to Claim 1,
**characterised in that**
the tractor vehicle protection valve (40) is part of an air treatment unit (28) of the pneumatic brake device (10).

4. Pneumatic brake device (10) according to any of the preceding claims,
**characterised in that**
the valve device (32) comprises at least one pressure sensor, by means of which a pressure fall of the system pressure to below a specified threshold value can be determined and a signal can be generated, with reference to which the parking brake of the trailer can be actuated by means of the electronic control unit (24).

5. Pneumatic brake device (10) according to any of the preceding claims,
**characterised in that**
the valve device (32) comprises at least one pneumatic valve, by means of which the parking brake of the trailer can be actuated.

6. Pneumatic brake device (10) according to any of the preceding claims,
**characterised in that**
the first and/or second bistable valve unit (26, 30) comprises a bistable valve with feedback.

7. Pneumatic brake device (10) according to Claim 6,
**characterised in that**
the bistable valve is a relay valve.

8. Pneumatic brake device (10) according to Claim 7,
**characterised in that**
for the first bistable valve unit (26) the relay valve is the relay valve of the utility vehicle.

9. Pneumatic brake device (10) according to Claims 7 or 8,
**characterised in that**
for the second bistable valve unit (30) the relay valve is the relay valve of the trailer.

10. Pneumatic brake device (10) according to any of Claims 7 to 9,
**characterised in that**
the bistable valve unit (26, 30) also comprises a throttle.

11. Pneumatic brake device (10) according to any of Claims 7 to 10,
**characterised in that**
the bistable valve unit (26, 30) also comprises a pressure sensor.

12. Pneumatic brake device (10) according to any of Claims 7 to 11,
**characterised in that**
the bistable valve unit (26, 30) also comprises at least two magnetic valves.

13. Pneumatic brake device (10) according to any of Claims 7 to 11,
**characterised in that**
the valve device (32) is formed together with the relay valve of the trailer.

14. Pneumatic brake device (10) according to Claim 13,
**characterised in that**
the valve device (32) also comprises at least two magnetic valves, a pressure sensor and a throttle.

15. Pneumatic brake device (10) according to any of Claims 1 to 5,
**characterised in that**
the first and/or second bistable valve unit (26, 30) comprises a bistable valve without feedback.

16. Pneumatic brake device (10) according to Claim 15,
**characterised in that**
the bistable valve (26, 30) is a bistable 3/2-way valve that controls a relay valve.

17. Pneumatic brake device (10) according to Claims 15 or 16,
**characterised in that**
the bistable valve (26, 30) is a relay valve.

18. Pneumatic brake device (10) according to Claim 17,
**characterised in that**
for the first bistable valve unit (26), the relay valve is the relay valve of the utility vehicle.

19. Pneumatic brake device (10) according to Claims 17 or 18,
**characterised in that**
for the second bistable valve unit (30) the relay valve is the relay valve of the trailer.

20. Pneumatic brake device (10) according to any of Claims 17 to 19,
**characterised in that**
the bistable valve unit (26, 30) also comprises a throttle.

21. Pneumatic brake device (10) according to any of Claims 17 to 20,
**characterised in that**
the bistable valve unit (26, 30) also comprises a pressure sensor.

22. Pneumatic brake device (10) according to any of Claims 17 to 21,
**characterised in that**
the bistable valve unit (26, 30) also comprises at least two magnetic valves.

23. Pneumatic brake device (10) according to any of Claims 17 to 22,
**characterised in that**
the valve device (32) is formed together with the relay valve of the trailer.

24. Pneumatic brake device (10) according to Claim 23,
**characterised in that**
the valve device (32) also comprises at least one magnetic valve and a pressure sensor.

25. Pneumatic brake device (10) according to Claim 24,
**characterised in that**
the valve device (32) also comprises at least one throttle.

## Revendications

1. Dispositif (10) pneumatique de frein d'un véhicule utilitaire, comprenant au moins un ressort (12) accumulateur, pouvant être commandé pneumatiquement, d'un frein de stationnement du véhicule utilitaire, comprenant un dispositif (16) électronique de frein de stationnement, comprenant au moins une électronique (24) de commande, au moins une première unité (26) de vanne bistable et au moins une deuxième unité (30) de vanne bistable, au moins un dispositif (32) de vanne, qui peut être commuté de manière à ce que, lorsque la pression de système s'abaisse pour l'alimentation d'un frein de stationnement d'une remorque du véhicule tracteur, le frein de stationnement de la remorque puisse être activé, et comprenant une vanne (40) de protection du véhicule tracteur, dans lequel, au moyen de la première unité (26) de vanne bistable, le frein de stationnement du véhicule utilitaire, et au moyen de la deuxième unité (30) de vanne bistable, le frein de stationnement de la remorque peut être commandé.

2. Dispositif (10) de frein pneumatique suivant la revendication 1,
**caractérisé en ce que**
la vanne (40) de protection du véhicule tracteur fait partie du dispositif (16) de frein de stationnement électronique.

3. Dispositif (10) de frein pneumatique suivant la revendication 1,
**caractérisé en ce que**
la vanne (40) de protection du véhicule tracteur fait partie d'une installation (28) de préparation d'air du dispositif (10) de frein pneumatique.

4. Dispositif (10) de frein pneumatique suivant l'une des revendications précédentes,
**caractérisé en ce que**
le dispositif (32) de vanne a au moins un capteur de pression au moyen duquel une chute de pression de la pression du système, en dessous d'une valeur de seuil donnée à l'avance, peut être déterminée et un signal peut être produit à l'aide duquel, au moyen de l'électronique (24) de commande, le frein de stationnement de la remorque peut être activé.

5. Dispositif (10) de frein pneumatique suivant l'une des revendications précédentes,
**caractérisé en ce que**
le dispositif (32) de vanne a au moins une vanne pneumatique, au moyen de laquelle le frein de stationnement de la remorque peut être activé.

6. Dispositif (10) de frein pneumatique suivant l'une des revendications précédentes,
**caractérisé en ce que**
la première et/ou la deuxième unité (26, 30) de vanne bistable comprend une vanne bistable à réaction.

7. Dispositif (10) de frein pneumatique suivant la revendication 6,
**caractérisé en ce que**
la vanne bistable est une vanne relais.

8. Dispositif (10) de frein pneumatique suivant la revendication 7,
**caractérisé en ce que**,
pour la première unité (26) de vanne bistable, la vanne relais" est la vanne relais du véhicule utilitaire.

9. Dispositif (10) de frein pneumatique suivant la revendication 7 ou la revendication 8,
**caractérisé en ce que**,
pour la deuxième unité (30) de vanne bistable, la vanne relais est la vanne relais de la remorque.

10. Dispositif (10) de frein pneumatique suivant l'une des revendications 7 à 9,
**caractérisé en ce que**
l'unité (26, 30) de vanne bistable a, en outre, un étranglement.

11. Dispositif (10) de frein pneumatique suivant l'une des revendications 7 à 10,
**caractérisé en ce que**
l'unité (26, 30) de vanne bistable a, en outre, un capteur de pression.

12. Dispositif (10) de frein pneumatique suivant l'une des revendications 7 à 11,
**caractérisé en ce que**
l'unité (26, 30) de vanne bistable a au moins deux électrovannes.

13. Dispositif (10) de frein pneumatique suivant l'une des revendications 7 à 11,
**caractérisé en ce que**
le dispositif (32) de vanne est constitué de la vanne relais de la remorque.

14. Dispositif (10) de frein pneumatique suivant la revendication 13,
**caractérisé en ce que**
le dispositif (32) de vanne a au moins deux électrovannes, un capteur de pression et un étranglement.

15. Dispositif (10) de frein pneumatique suivant l'une des revendications 1 à 5,
**caractérisé en ce que**
la première et/ou la deuxième unité (26, 30) de vanne bistable comprend une vanne bistable sans réaction.

16. Dispositif (10) de frein pneumatique suivant la revendication 15,
**caractérisé en ce que**
la vanne (26, 30) bistable est une vanne bistable à 3/2 voies, qui commande une vanne relais.

17. Dispositif (10) de frein pneumatique suivant la revendication 15 ou la revendication 16,
**caractérisé en ce que**
la vanne (26, 30) bistable est une vanne relais.

18. Dispositif (10) de frein pneumatique suivant la revendication 17,
**caractérisé en ce que**,
pour la première unité (26) de vanne bistable, la vanne relais est la vanne relais du véhicule utilitaire.

19. Dispositif (10) de frein pneumatique suivant la revendication 17 ou la revendication 18,
**caractérisé en ce que**,
pour la deuxième unité (30) de vanne bistable, la vanne relais est la vanne relais de la remorque.

20. Dispositif (10) de frein pneumatique suivant l'une des revendications 17 à 19,
**caractérisé en ce que**
l'unité (26, 30) de vanne bistable a, en outre, un étranglement.

21. Dispositif (10) de frein pneumatique suivant l'une des revendications 17 à 20,
**caractérisé en ce que**
l'unité (26, 30) de vanne bistable a, en outre, un capteur de pression.

22. Dispositif (10) de frein pneumatique suivant l'une des revendications 17 à 21,
**caractérisé en ce que**
l'unité (26, 30) de vanne bistable a, en outre, au moins deux électrovannes.

23. Dispositif (10) de frein pneumatique suivant l'une des revendications 17 à 22,
**caractérisé en ce que**
le dispositif (32) de vanne est constitué de la vanne relais de la remorque.

24. Dispositif (10) de frein pneumatique suivant la revendication 23,
**caractérisé en ce que**
le dispositif (32) de vanne a, en outre, au moins une électrovanne et un capteur de pression.

25. Dispositif (10) de frein pneumatique suivant la revendication 24,
**caractérisé en ce que**
le dispositif (32) de vanne a, en outre, au moins un étranglement.
